# EUROPEAN PATENT SPECIFICATION

(11) **EP 2 781 735 B1**
(45) Date of publication and mention of the grant of the patent: **19.07.2017**
(21) Application number: 13001360.0
(22) Date of filing: 18.03.2013
(51) Int. Cl.: F03D 5/06, F03D 7/00

(54) **System and method for converting kinetic energy of a fluid to electric energy**
System und Verfahren zur Umwandlung von kinetischer Energie eines Fluids in elektrische Energie
Système et procédé pour la conversion d'énergie cinétique d'un fluide en énergie électrique

(43) Date of publication of application: 24.09.2014
(73) Proprietor: Koplin, Moritz, 28857 Syke (DE)
(72) Inventor: Koplin, Moritz, 28857 Syke (DE)
(74) Representative: Koplin, Moritz

(56) References cited:
- GB-A- 2 480 683
- US-A1- 2002 040 948

## Description

This invention relates to systems for converting kinetic energy to electric energy. In particular, this invention relates to controlling a conversion system for converting kinetic energy of a fluid to electric energy. More particularly, this invention relates to controlling the speed at which a mechanical means, which is driven by fluid motion, transmits mechanical power to a generator.

Conversion systems for converting kinetic energy of a fluid to electric energy are known in the art, e.g., water power and wind power systems. Usually, water power and wind power systems make use of mechanical means, e.g. water or wind turbines, for transforming fluid motion to a torque which is exerted upon a shaft coupled to a generator. Besides other factors, the power output of the generator depends on the mechanical power with which it is fed, i.e. the torque multiplied by the angular speed of the shaft. Furthermore, turning speed and torque are inversely related, i.e. increasing the turning speed lowers the torque and vice versa. Hence, mechanical power is zero for zero torque and maximum turning speed. Analogously, mechanical power is zero for maximum torque and zero angular speed. Hence, the optimum is not to be searched for at the edges of the operating region, i.e. zero or maximum turning speed, but in between. Furthermore, environmental conditions such as water speed and wind speed may change (possibly in irregular patterns), and hence the optimum turning speed will be non-static. Thus, controlling the system to provide maximum mechanical power to the generator cannot be achieved by operating the system at a predetermined point of operation. Rather, controlling the system to provide maximum mechanical power is an issue monitoring changes in the environmental conditions and reacting to them by modifying the point of operation accordingly. To heretofore propose a feasible control concept, is the object of this invention.

US 2002/0040948 A1 discloses a wind harnessing system comprising a kite.

According to a first aspect there is disclosed a system for converting kinetic energy of a fluid to electric energy. The system is defined in claims 1-9. The system comprises a generator. The generator is coupled to a shaft for producing electric power upon rotation of the shaft. The shaft may be driven by mechanical means. The mechanical means are adapted to transform fluid motion to shaft rotation by exerting a torque upon the shaft. The mechanical means may comprise an object that is suitable for providing a rotational or translational force when being placed into, e.g., surrounded by, the fluid. i.e., the mechanical means may comprise one or more turbines, e.g., water turbines or wind turbines. The fluid may be a liquid, a gas, or a gas mixture, e.g., water or air. In case of a translational force exerted by the fluid upon the object, a torque upon the shaft may be provided by the mechanical means converting the translational force to a rotational force. For example, the mechanical means may comprise a tether and a drum.

Furthermore, the object upon which a translational force is exerted by the fluid may be an object of any shape as long as the object experiences a force into the direction of the fluid motion when being surrounded (at least partially) by the fluid. In other words, the object may have any shape as long as the shape is adapted to sufficiently deflect the moving fluid. Preferably, the object may be shaped for providing high fluid deflection, i.e. the object may be shaped to be subject to a high pulling force exerted by the fluid upon the object. For example, the object may be an arc-shaped structure comprising a flexible foil, e.g., a (surf) kite. The kite may comprise an arc-shaped structure held in shape by bridle lines and/or an at least partially inflatable arc-shaped structure.

The object may be coupled to the tether for pulling the tether from the drum when being placed into moving water or wind. The drum may be coupled to the shaft which may be in turn coupled to the generator. Additionally, there may be a gear to modify torque and turning speed transmitted by the shaft to the generator. The gear may be provided between drum and shaft or shaft and generator.

The system further comprises a controller for controlling the relative speed between the object or at least parts of the object and the fluid, for example, by controlling the angular speed of the shaft. In case of a kite which is connected by a tether to a drum, controlling the angular speed of the shaft which is coupled to the drum determines the speed at which tether is released from the drum und thus, allows controlling the speed of the kite in radial direction. Controlling the turning speed of the shaft may be achieved by controlling a gear ratio of a gear connected to the shaft. Alternatively, the turning speed of the shaft may be controlled by controlling the mechanical resistance exerted by the generator upon the shaft. That is, when the generator produces electric power from the mechanical power that is fed into the generator via the shaft, the generator exerts a torque upon the shaft that is oppositely directed to the torque which is exerted by the mechanical means upon the shaft.

Since the mechanical power which is transmitted to the generator is equal to the torque multiplied by the angular speed, the mechanical power may be raised by lowering the turning speed if the torque exhibits a steep enough increase in response to the decrease of the turning speed and vice versa. However, without a precise model of fluid speed and fluid/object interaction it is not possible to calculate the turning speed at which the mechanical power is optimal. Furthermore, even if a precise model of fluid speed and object fluid interaction is available, the turning speed at which the maximum mechanical power is produced will change due to changing environmental conditions or changing system parameters such as changes in wind and water speed, fluctuations in fluid object interaction or changes in the orientation of the object or relevant parts of the object relative to the fluid speed.

To resolve this issue, the controller is adapted to monitor the magnitude of the torque, i.e. the rotational momentum exerted upon the shaft, the speed of the shaft rotation, and the mechanical power fed to the generator. In other words, the controller may not determine a theoretical optimum using a model but rather monitor real values of selected system parameters and deduce the optimal point of operation therefrom in real time.

As stated above, fluid motion, interaction between fluid and mechanical means, and the object orientation relative to the fluid speed are non-static and hence, torque and turning speed of the shaft are ever changing. The invention uses these "natural" changes to deduce the optimal point of operation. This is advantageous in that the controller does not have to "actively" sweep through the state space in search for the optimum point of operation. For example, the system may be in a state where more mechanical power could be produced by accelerating the shaft. The controller could now actively search for the optimum point of operation by varying the shaft turning speed while monitoring the mechanical power that is transmitted to the generator or the power output of the generator. In this case, accelerating the shaft rotation should increase the mechanical power which is transmitted to the generator. Such shaft rotation acceleration, however, is disadvantageous in that it consumes energy and may destabilize the system. To avoid this, the present invention uses the above mentioned variations in fluid motion and the interaction between fluid and mechanical means, e.g., wind gusts, or changes in the object orientation relative to the fluid in order to determine the optimal point of operation.

For example, in case that the fluid moves faster, more torque will be transferred to the shaft, the shaft will at least shortly accelerate and the mechanical power will increase. Due to the fact that shaft acceleration leads to an increase in mechanical power, the controller may follow this by raising the aimed at shaft turning speed, for example by lowering the resistance of the generator against shaft rotation.

When the fluid motion does no longer increase but remains constant, the shaft turning speed may still be further increased until the mechanical power decreases. The mechanical power may decrease when the torque decrease due to the increased shaft rotation overcompensates the increase in shaft rotation with regard to the production of mechanical power. When the system has passed the optimum in terms of mechanical power production, the shaft may be decelerated for the system to return to the optimum.

When the fluid motion decreases while the shaft is accelerated, there are two possible scenarios. The mechanical power may decrease and hence, the shaft rotation speed may be decreased by the controller. Alternatively, the mechanical power may still continue to increase because the increase in shaft turning speed may have a greater effect on mechanical power production than the decrease in fluid motion. As the torque decreases, however, the optimum in mechanical power production will be at a lower shaft turning speed and hence, an increasing shaft turning speed will lead the system beyond the optimum in terms of mechanical power production.

At this point, the straight forward logic, based on keeping shaft acceleration/deceleration as long as the power output increases and inverting acceleration/deceleration when the power output decreases, does no longer work, since the mechanical power does not increase, even though the shaft turning speed is no longer accelerated but decelerated. In other words, when the relative speed between fluid and object decreases, it may not be possible to decide whether to accelerate or decelerated the shaft turning speed based on the power output because in both cases, the mechanical power transmitted to the generator may decrease. The same may be true for situations where the relative speed between fluid and object increases since the mechanical power may increase even if the shaft turning speed is below the optimum and the shaft is decelerated.

One possibility to avoid this problem would be to follow the steepest increase or the gentlest decrease in mechanical power production. This, however, would necessitate an active search in case of which one would have to deal with the above described disadvantages.

These disadvantages are avoided by the present invention in that the controller applies the following control laws.

The controller is adapted to increase shaft turning speed acceleration respectively decrease shaft turning speed deceleration, if, during a preceding period, a shaft turning speed increase was accompanied by a torque decrease and a power output increase. Likewise, the controller is adapted to increase shaft turning speed acceleration respectively decrease shaft turning speed deceleration, if, during a preceding period, a shaft turning speed decrease was accompanied by a torque increase and a power output decrease. Given the example above, the controller is adapted to increase shaft turning speed acceleration respectively decrease shaft turning speed deceleration, if, during a preceding period, a shaft turning speed increase was accompanied by a torque increase.

Analogously, the controller is adapted to decrease shaft turning speed acceleration respectively increase shaft turning speed deceleration, if, during a preceding period, a rotational speed increase was accompanied by a torque decrease and a power output decrease. Likewise, the controller is adapted to decrease shaft turning speed acceleration respectively increase shaft turning speed deceleration, if, during a preceding period, a turning speed decrease was accompanied by a torque increase and a power output increase. Given the example above, the controller is adapted to decrease shaft turning speed acceleration respectively increase shaft turning speed deceleration, if, during a preceding period a shaft turning speed decrease was accompanied by a torque decrease.

By taking the shaft turning speed, the torque and the power output into account, it can be assured that the system does not overreact to a changes in the environment. For example, a decrease in fluid motion, which is followed by a decrease in shaft turning speed, will not lead to a "free fall" of the shaft turning speed, because in case the shaft turning speed is decreased too fast, the torque will increase and hence, the shaft turning speed will be more gently decreased or even increased.

In order to keep the system in a controllable state there may exist upper and lower bounds for the torque and the controller may not follow the above described control laws when the torque approaches and/or exceeds/falls below the respective bound.

In case of an object that travels with the fluid away from the drum, the object has to be somehow retracted. For example, a kite that pulls a tether from a drum has to be retracted when the tether has been unwound from the drum. In this case, there exist two phases, the reel out phase (RO) where the object travels away from the drum and the reel in phase (RI) where the object is retracted. Since RO phase and RO phase are coupled by the fact that any meter of tether that is reeled out has to be reeled in again, a system with RO and RI phase cannot solely rely on the current mechanical power during either RO or RI phase when employing the above described control laws.

Doing so would in fact lead to a too fast RO speed. This is because by neglecting the RI phase, it is also neglected that a lower RO speed avoids energy loss during RI because the RI speed can be lowered which lowers the tether tension. Alternatively or in addition, a lower RO speed may lead to a shorter RI phase which increases the mean power output, i.e., the energy gain divided by the duration of RO phase and RI phase.

Analogously, it would also lead to too slow RI speed. For example, reeling in faster leads to a shorter RI phase, which increases the mean power output.

To account for RO and RI phase, the above referred to mechanical power may be replaced by an indicator for the mechanical power production. For a system operated in RO and RI phases, the indicator value may be calculated for the current phase (RI or RO) taking into account parameters from the preceding phase (RO or RI). Without RO and RI phases, the indicator value may simply indicate the value of the mechanical power.

For example, the indicator value during RO may be calculated based on torque (or tether tension) during RO (TRO) minus an estimate for the torque (or tether tension) during RI (TRI) divided by the sum of the inverse of the angular velocity (or RO speed) (vRO) and the inverse of the estimated angular velocity (or RI speed) during RI (vRI): (TRO - TRI_estimated)/(1/vRO+1/vRI_estimated) where the suffix "_estimated" refers to an estimated value. Analogously, the indicator value during RI may be calculated by (TRO_estimated - TRI)/(1/vRO_estimated+1/vRI). Upon initialization, the estimated values may be set to starting values and during operation, after a first RO and a first RI phase, the estimated values may be calculated as the (weighted) mean during one or more preceding phases, e.g., the estimated torque during RI may be derived from the mean torque during the preceding RI phase.

In order to minimize the energy loss during the RI phase, the mechanical means may be adapted to transition between a full power state where a first torque is exerted upon the shaft and a depowered state, where a second torque is exerted upon the shaft, wherein the second torque is lower than the first torque. For example, an object like a kite may be directed by bridle lines through the fluid, e.g., by flying crosswind at a low elevation angle during RO while flying at a high elevation angle during RI. Alternatively or in addition, a thin side of the object may be rotated into the direction of the fluid speed when the mechanical means are depowered. Depowering the mechanical means may also comprise modifying the shape of the object.

Between RO and RI phase, the system may enter a transition phase during which the RO speed is decreased by usage of a mechanical brake. Between RI and RO phase, the system may enter a transition phase during which the mechanical means is fully powered only after the RI speed is lower than a threshold.

According to a second aspect there is disclosed a method for converting kinetic energy of a fluid to electric energy. The method is defined in claims 10-12. The generator may be operated as a generator during a RIO phase and as a motor during a RI phase and the indicator value for the mechanical power may be calculated by (TRO - TRI_estimated)/(1/vRO+1/vRI_estimated) during the RO phase and (TRO_estimated - TR)/(1/vRO_estimated+1/vRI) during the RI phase where TRO is the torque or tether tension during RO, TRI is the torque or tether tension during RI, vRO is the angular or tether speed during RO, vRI is the angular or tether speed during RI and where the suffix _estimated refers to an estimated value. Although, the invention can be practiced for a plurality of systems for converting kinetic energy to electric energy like water and wind power systems, the following detailed description of the control logic is based on the example of kite power systems. This however, should not limit the invention as set out in the independent claims solely to kite power systems.

For a better understanding, the control logic is described in greater detail with reference to the accompanying drawings in which:
- Fig. 1: schematically shows a kite power system;
- Fig. 2: schematically shows four states of a kite power system; and
- Fig. 3: schematically shows two further states of a kite power system.

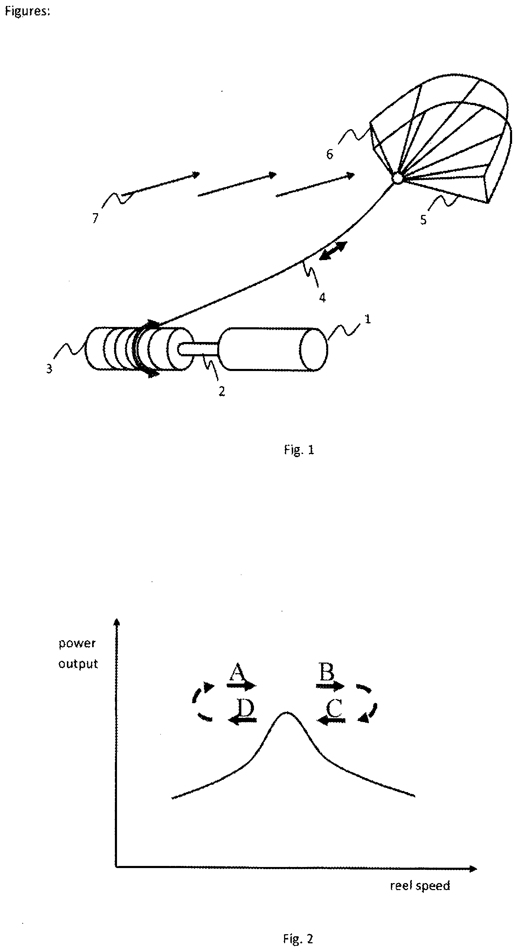

Fig. 1 schematically shows a kite power system being operated in pumping operation mode, i.e., the system may be operated in energy production cycles where each energy production cycle consists of a RO and a RI phase. The kite power system may consist of one or more kites, 6. The kites may be placed into the wind, 7. The kites, 6, may be connected by bridle lines, 5, to a tether, 4. The tether, 4, may be wound around a drum, 3, that may be coupled over a shaft, 2, to a generator, 1.

By pulling a piece of tether, 4, of length dL from the drum, 3, the energy gain during RO, dERO, is dERO = TRO dL.

As the piece of tether, 4, of length dL has to be pulled back during the RI phase, the energy gain during the RO phase is accompanied by an energy loss during the RI phase, dERI, that is produced when pulling the piece of tether, 4, dL back on the drum, 3, dERI = -TRI dL.

Accordingly, the net energy gain, dE, produced by pulling a piece of tether, 4, of length dL from the drum, 3, and back onto the drum, 3, is dE = (TRO - TRI) dL.

Since the time for pulling the piece of tether from the drum, 3, during RO , dtRO, is dtRO =d_{L} vRO and the time for pulling the piece of tether, 4, back on the drum, 3, during RI, dtRt, is dtRI = dL vRI, the overall time, dt, for reeling a piece of tether, 4, of length dL from the drum, 3, and back onto the drum, 3, is dt = (1/vRO + 1/vRI) dL. Thus, the net energy gain is dE = (TRO - TRI) 1/(1/vRO + 1/vRI) dt:

Hence, the net power produced by a kite power system is dE/dt = (TRO - TRI) 1/(1/vRO + 1/vRI). Accordingly, the maximum power output is produced for those values of TRO, TRI, vRO and vRI that provide for dE²/dt² = 0. During RO, TRI and vRI may be estimated while TRO and vRO may be optimized and vice versa.

Besides providing for maximum power, a further control objective may be to operate the system in a safe state. This may mean that the tether tension shall neither exceed a threshold above which the system is damaged nor fall below a threshold below which the kite cannot be feasibly controlled anymore. Furthermore, it has to be assured that the reel speed is within the operating region given by the system setup. Accordingly, there exists an operating region for the pulling force and the reel speed which has to be observed when maximizing the energy gain per hour of operation. Hence, the controller may preferably be adapted to accelerate or decelerate the shaft turning speed accordingly when the system approaches or exceeds the bounds for the operation space, to keep torque and angular speed within given bounds.

Typically, increasing the reel speed decreases the tether tension and decreasing the reel speed increases the tether tension. However, unless the interdependence between reel speed and tether tension can be accurately modeled for the whole state space and the system state can be accurately estimated, it may not be possible to calculate the optimum power output directly. Without an accurate model of reel speed and tether tension interdependence and an accurate system state estimate, the system may have to search for the optimum.

In case of a non-periodic motion where the tether tension and the reel speed are expected to remain rather static, the optimum could be actively searched for, e.g. by adding a sine oscillation to the reel speed and monitoring the reaction of the tether tension and the power output. The drawback of this approach is that for these oscillations to be produced, energy has to be consumed. Furthermore, the system might not converge to its optimum but continuously oscillate around the optimum. And finally, by feeding oscillations into an elastic system, system stability would be decreased.

In case of periodic motion, however, the system itself already provides the dynamics that are necessary to find the optimum. For example, if the kite flies crosswind and slows down at the edge of the power zone, the tether tension decreases as less lift forces are produced. As a consequence, the drum experiences less torque and in consequence, the RO speed will undergo at least a small variation. As the change in reel speed, tether tension and calculated power output can be monitored, it can be determined whether the reel speed has to be accelerated or decelerated in order to increase the power output. In the absence of high wind variations, there exist thus four system state subspaces as schematically shown in figure 2, where the power output is plotted over the reel speed assuming a constant wind speed:
(A) Reel speed increases; tether tension decreases; power output increases.
(B) Reel speed increases; tether tension decreases; power output decreases.
(C) Reel speed decreases; tether tension increases; power output increases.
(D) Reel speed decreases; tether tension increases; power output decreases.

Please note that in the following, a negative reel speed is treated as a positive RI speed while a positive reel speed is treated as a positive RO speed. Hence, lowering the reel speed means lowering the RO speed or increasing the RI speed, depending on the current mode in which the system operates.

In system state subspace A, the reel speed is too low, i.e. a reel speed increase raises the power output during the energy production cycle. During a RO phase, the system is in system state subspace A, if raising the RO speed, which raises the power output during the RO phase and shortens the duration of the energy production cycle, overcompensates the decreasing tether tension. During a RI phase, the system is in system state subspace A, if lowering the RI speed, which lengthens the duration of the energy production cycle is overcompensated by the decreasing tether tension and the lower energy loss during the RI phase.

In system state subspace B, a reel speed increase lowers the power output during the energy production cycle. During a RO phase, the system is in system state subspace B, if raising the RO speed, which raises the power output during the RO phase and shortens the duration of the energy production cycle, is overcompensated by the decreasing tether tension. During a RI phase, the system is in system state subspace B, if lowering the RI speed, which lengthens the duration of the energy production cycle, overcompensates the decreasing tether tension and the lower energy loss during the RI phase.

In system state subspace C, the reel speed is too high, i.e. a reel speed decrease raises the power output during the energy production cycle. During a RO phase, the system is in system state subspace C, if decreasing the RO speed, which lowers the power output during the RO phase and lengthens the duration of the energy production cycle, is overcompensated by the increasing tether tension. During a RI phase, the system is in system state subspace C, if raising the RI speed, which shortens the duration of the energy production cycle, overcompensates the decreasing tether tension and the higher energy loss during the RI phase.

In system state subspace D, a reel speed decrease lowers the power output during the energy production cycle. During a RO phase, the system is in system state subspace D, if decreasing the TRO speed, which lowers the power output during the RO phase and lengthens the duration of the energy production cycle, overcompensates the increasing tether tension. During a RI phase, the system is in system state subspace D, if raising the RI speed, which shortens the duration of the energy production cycle, is overcompensated by the decreasing tether tension and the higher energy loss during the RI phase.

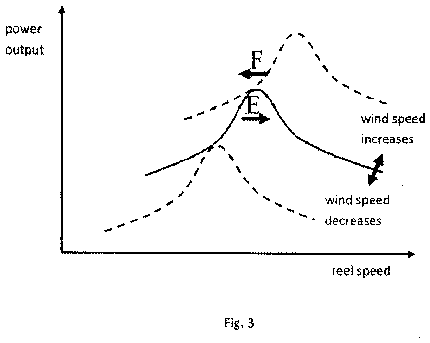

In case that the wind variations are stronger than the reel speed variation, two additional system subspaces have to be considered which are schematically visualized in figure 3:
(E) Reel speed increases; tether tension increases.
(F) Reel speed decreases; tether tension decreases.

In figure 3, the optimum power output is relocated to higher or lower reel speeds due to wind speed variations.

In system state subspace E, the reel speed increases and the tether tension increases. During a RO phase, a combined increase in reel speed and tether tension is generally favorable with regard to power output. During a RI phase, a combined increase in reel speed and tether tension is generally unfavorable with regard to power output.

In system state subspace F, the reel speed decreases and the tether tension decreases. During a RO phase, a combined decrease in reel speed and tether tension is generally unfavorable with regard to power output. During a RI phase, a combined decrease in reel speed and tether tension is generally favorable with regard to power output.

With regard to system state subspaces A to D it seems feasible to follow the following control laws:

### (A) Reel speed increases; tether tension decreases: power output increases:

As the power output increases with the increasing reel speed, the reel speed should be further increased. If the reel speed is increased, the tether tension is expected to decrease. This applies to both, the RO phase and the RI phase. During the RO phase, a higher RO speed decreases the effective wind speed in tether and thus lowers the tether tension. During the RI phase, a lower RI speed decreases the effective wind speed in tether direction and thus lowers the tether tension.

A decreasing tether tension may cause problems if the tether tension approaches its lower limit, below which the kite cannot be safely controlled anymore. Accordingly, in case the tether tension approaches its lower limit, the reel speed is not to be raised but lowered.

### (B) Reel speed increases; tether tension decreases; power output decreases:

As the power output decreases with the increasing reel speed, the reel speed should be decreased. A decreasing reel speed raises the tether tension. Hence, no further action has to be taken when the tether tension approaches its lower limit. Or in other words, when the system is in this state subspace, the tether tension time derivative is changed due to the decreasing power output and hence, raising the power output also raises the tether tension which is thereby led away from its lower limit.

### (C) Reel speed decreases; tether tension increases; power output increases:

As the power output increases with the decreasing reel speed, the reel speed should be further decreased. If the reel speed is decreased, the tether tension is expected to increase. This applies to both, the RO phase and the RI phase. During the RO phase, a lower RO speed increases the effective wind speed in tether direction and thus raises the tether tension. During the RI phase, a higher RI speed increases the effective wind speed in tether direction and thus raises the tether tension.

An increasing tether tension may cause problems if the tether tension approaches its upper limit, above which the system may be damaged. Accordingly, in case the tether tension approaches its upper limit, the reel speed is not to be lowered but raised.

### (D) Reel speed decreases; tether tension increases; power output decreases:

As the power output decreases with the decreasing reel speed, the reel speed should be increased. An increasing reel speed lowers the tether tension. Hence, no further action has to be taken when the tether tension approaches its upper limit. Or in other words, when the system is in this state subspace, the tether tension time derivative is changed by the controller due to the decreasing power output and hence, raising the power output also lowers the tether tension which is thereby led away from its upper limit.

With regard to system state subspaces E and F it seems feasible to follow the following control laws:

### (E) Reel speed increases; tether tension increases:

An increasing reel speed combined with an increasing tether tension results from an increasing wind speed. Since an increasing wind speed raises the optimum reel speed, the reel speed should be raised.

An increasing tether tension may cause problems if the tether tension approaches its upper limit, above which the system may be damaged. Accordingly, in case the tether tension approaches its upper limit, the reel speed is to be raised even faster. Thus, in contrast to system state subspaces A to D, the reel speed has not to be inversed, since only a raise in reel speed will limit the tether tension.

### (F) Reel speed decreases; tether tension decreases:

A decreasing reel speed combined with a decreasing tether tension results from a decreasing wind speed. Since a decreasing wind speed lowers the optimum reel speed, the reel speed should be lowered.

A decreasing tether tension may cause problems if the tether tension approaches its lower limit, below which the kite cannot be safety controlled anymore. Accordingly, in case the tether tension approaches its lower limit, the reel speed is to be lowered even faster. Thus, in contrast to system state subspaces A to D, the reel speed has not to be inversed, since only a fall in reel speed will limit the tether tension.

## Claims

1. System for converting kinetic energy of a fluid to electric energy, the system comprising:
a generator coupled to a shaft for producing electric power upon rotation of the shaft;
mechanical means being adapted to convert fluid motion into a torque exerted upon the shaft;
a controller for controlling the turning speed of the shaft;
**characterized in that**
the controller is adapted to monitor the magnitude of the torque exerted upon the shaft, the turning speed of the shaft and an indicator value of the mechanical power fed to the generator and:
to increase shaft turning speed acceleration respectively decrease shaft turning speed deceleration, if, during a preceding period either:
a turning speed increase was accompanied by a torque decrease and an indicator value increase; or
a turning speed decrease was accompanied by a torque increase and an indicator value decrease; or
a turning speed increase was accompanied by a torque increase; and
to decrease shaft turning speed acceleration respectively increase shaft turning speed deceleration, if, during a preceding period either:
a turning speed increase was accompanied by a torque decrease and an indicator value decrease; or
a turning speed decrease was accompanied by a torque increase and an indicator value increase; or
a turning speed decrease was accompanied by a torque decrease.

2. System according to claim 1, wherein the mechanical means comprises an arc shaped object, a tether and a drum.

3. System according to claim 2, wherein the indicator value for the power output is calculated as (TRO-TRI_estimated)/(1/vRO+1/vRI_estimated) during the reel out phase and (TRO_estimated - TRI)/(1/vRO_estimated+1/vRI) during the reel in phase where TRO is the tether tension during reel out, TRI is the tether tension during reel in, vRO is the tether speed during reel out, vRI is the tether speed during reel in and where the suffix _estimated refers to an estimated value.

4. System according to claim 3, wherein TRI_estimated and vRI_estimated are calculated as the respective means over the preceding reel in phase and/or TRO_estimated and vRO_estimated are calculated as the respective means over the preceding reel out phase.

5. System according to claim 2, wherein the mechanical means are adapted to transition between a full power state where a first torque is exerted upon the shaft and a depowered state, where a second torque is exerted upon the shaft, wherein the second torque is lower than the first torque.

6. System according to claim 5, wherein depowering the mechanical means comprises modifying the shape of the arc shaped object.

7. System according to one of the preceding claims, wherein the system enters a transition phase between reel out and reel in phase where the reel out speed is decreased by usage of a mechanical brake.

8. System according to one of the preceding claims, where the system enters a transition phase between the reel in and the reel out phase where the mechanical means is powered only after the reel in speed is below a threshold.

9. System according to claim 1, wherein the mechanical means is a wind turbine or a water turbine.

10. Method for converting kinetic energy of a fluid to electric energy comprising the steps of:
monitoring, during a period, turning speed, torque and an indicator value for the mechanical power fed to a generator coupled to a shaft for producing electric power upon rotation of the shaft, with mechanical means being adapted to convert fluid motion into a torque exerted upon the shaft; and
increasing, by a controller, the shaft turning speed acceleration respectively decreasing shaft turning speed deceleration, if, during the period either:
a turning speed increase was accompanied by a torque decrease and an indicator value increase; or
a turning speed decrease was accompanied by a torque increase and an indicator value decrease; or
a turning speed increase was accompanied by a torque increase; and
decreasing, by the controller, shaft turning speed acceleration respectively increasing shaft turning speed deceleration, if, during the period either:
a turning speed increase was accompanied by a torque decrease and an indicator value decrease; or
a turning speed decrease was accompanied by a torque increase and an Indicator value Increase; or
a turning speed decrease was accompanied by a torque decrease.

11. Method according to claim 10, wherein the generator is operated as a generator during a reel out phase and as a motor during a reel in phase and wherein the indicator value for the mechanical power is calculated by (TRO-TRI_estimated)/(1/vRO+l/vRI_estimated) during the reel out phase and (TRO_estimated - TRI)/(1/vRO_estimated+1/vRI) during the reel in phase where TRO is the tether tension during reel out, TRI is the tether tension during reel in, vRO is the tether speed during reel out, vRI is the tether speed during reel in and where the suffix estimated refers to an estimated value.

12. Method according to claim 11, wherein TRI_estimated and vRI_estimated are calculated as the respective means over the preceding reel in phase and/or TRO_estimated and vRO_estimated are calculated as the respective means over the preceding reel out phase.

## Patentansprüche

1. System zur Umwandlung von kinetischer Energie eines Fluids in elektrische Energie, wobei das System umfasst:
einen Generator, der mit einer Welle gekoppelt ist, um bei Drehung der Welle elektrische Energie zu erzeugen;
eine mechanische Einrichtung, die eingerichtet ist, eine Fluidbewegung in ein Drehmoment umzuwandeln, das auf die Welle ausgeübt wird;
eine Steuerung zur Steuerung der Drehgeschwindigkeit der Welle;
**dadurch gekennzeichnet, dass**
die Steuerung eingerichtet, die Größe des auf die Welle ausgeübten Drehmoments, die Drehgeschwindigkeit der Welle und einen Indikatorwert der dem Generator zugeführten mechanischen Leistung zu überwachen und:
die Drehzahlbeschleunigung der Welle zu erhöhen bzw. die Drehzahlverzögerung der Welle zu verringern, wenn während einer vorhergehenden Periode entweder:
eine Drehgeschwindigkeitszunahme von einer Drehmomentabnahme und einer Indikatorwertzunahme begleitet wurde; oder
eine Umdrehungsgeschwindigkeitsabnahme von einer Drehmomentzunahme und einer Indikatorwertabnahme begleitet wurde; oder
eine Drehzahlerhöhung von einer Drehmomentzunahme begleitet wurde; und
die Drehzahlbeschleunigung der Welle zu verringern bzw. die Drehzahlverzögerung der Welle zu erhöhen, wenn während einer vorhergehenden Periode entweder:
eine Drehzahlerhöhung von einer Drehmomentabnahme und einer Indikatorwertabnahme begleitet wurde; oder
eine Umdrehungsgeschwindigkeitsabnahme von einer Drehmomentzunahme und einem Indikatorwertanstieg begleitet wurde; oder
eine Umdrehungsgeschwindigkeitsabnahme von einer Drehmomentabnahme begleitet wurde.

2. System nach Anspruch 1, wobei die mechanische Einrichtung einen bogenförmigen Gegenstand, ein Halteseil und eine Trommel umfasst.

3. System nach Anspruch 2, wobei der Indikatorwert für die Leistungsabgabe während der Abrollphase als (TRO - TRI_geschätzt)/(1/vRO + 1/vRI_ geschätzt) und während der Aufrollphase als (TRO_geschätzt - TRI)/(1/vRO_geschätzt + 1/vRI) berechnet wird, wobei TRO die Seilspannung während des Abrollens, TRI die Seilspannung während des Aufrollens, vRO die Seilgeschwindigkeit während des Aufrollens, vRI die Seilgeschwindigkeit während des Abrollens ist und wobei sich das Suffix _geschätzt auf einen geschätzten Wert bezieht.

4. System nach Anspruch 3, wobei TRI_geschätzt und vRI_geschätzt als die jeweiligen Mittelwerte über die vorangehende Aufrollphase und/oder TRO_geschätzt und vRO_geschätzt als die jeweiligen Mittelwerte über die vorangehende Abrollphase berechnet werden.

5. System nach Anspruch 2, wobei die mechanische Einrichtung zum Übergang zwischen einem Vollleistungszustand, in dem ein erstes Drehmoment auf die Welle ausgeübt wird, und einem gedepowerten Zustand, in dem ein zweites Drehmoment auf die Welle ausgeübt wird, wobei das zweite Drehmoment niedriger ist, als das erste Drehmoment, eingerichtet ist.

6. System nach Anspruch 5, wobei das Depowern der mechanischen Einrichtung das Ändern der Form des bogenförmigen Objekts umfasst.

7. System nach einem der vorhergehenden Ansprüche, wobei das System in eine Übergangsphase zwischen Abrollphase und Aufrollphase eintritt, in der die Abrollgeschwindigkeit durch Verwendung einer mechanischen Bremse verringert wird.

8. System nach einem der vorhergehenden Ansprüche, wobei das System eine Übergangsphase zwischen Aufrollphase und Abrollphase eintritt, wo die mechanische Einrichtung erst dann gepowered werden, wenn die Einrollgeschwindigkeit unterhalb einer Schwelle liegt.

9. System nach einem der Ansprüche 1 bis 9, wobei die mechanische Einrichtung eine Windturbine oder eine Wasserturbine ist.

10. Verfahren zur Umwandlung von kinetischer Energie eines Fluids in elektrische Energie, umfassend die Schritte:
Überwachen, während einer Periode, einer Drehgeschwindigkeit, eines Drehmoments und eines Indikatorwertes für die mechanische Leistung, die einem Generator zugeführt wird, der mit einer Welle gekoppelt ist, um elektrische Energie bei Drehung der Welle mittels einer mechanischen Einrichtung, die eingerichtet ist, eine Fluidbewegung in ein auf eine Welle ausgeübtes Drehmoment zu wandeln, zu erzeugen, und
Erhöhen, durch eine Steuerung, der Drehzahlbeschleunigung bzw. Verringern der Drehzahlverzögerung, wenn, während der Periode entweder:
eine Drehgeschwindigkeitszunahme von einer Drehmomentabnahme und einer Indikatorwertzunahme begleitet wurde; oder
eine Drehgeschwindigkeitsabnahme von einer Drehmomentzunahme und einer Indikatorwertabnahme begleitet wurde; oder
eine Drehgeschwindigkeitszunahme von einer Drehmomentzunahme begleitet wurde; und
verringern, durch die Steuerung, der Drehzahlbeschleunigung bzw. Erhöhen der Drehzahlverzögerung, wenn, während der Periode entweder:
eine Drehgeschwindigkeitszunahme von einer Drehmomentabnahme und einer Indikatorwertabnahme begleitet wurde; oder
eine Drehgeschwindigkeitsabnahme von einer Drehmomentzunahme und einer Indikatorwertzunahme begleitet wurde; oder
eine Drehgeschwindigkeitsabnahme von einer Drehmomentabnahme begleitet wurde.

11. Verfahren nach Anspruch 10, wobei der Generator während einer Abrollphase als Generator und während einer Aufrollphase als Motor betrieben wird und wobei der Indikatorwert für die mechanische Leistung während der Abrollphase (TRO - TRI_geschätzt)/(1/vRO + 1/vRI_geschätzt) und während der Aufrollphase durch (TRO_ geschätzt - TRI)/(1/vRO_geschätzt + 1/vRI) berechnet wird, wobei TRO die Seilspannung während des Abrollens, TRI die Seilspannung während des Aufrollens, vRO die Seilgeschwindigkeit während des Aufrollens, vRI die Seilgeschwindigkeit während des Abrollens ist und wobei sich das Suffix _geschätzt auf einen geschätzten Wert bezieht.

12. Verfahren nach Anspruch 11, wobei TRI_geschätzt und vRI_geschätzt als die jeweiligen Mittelwerte über die vorangehende Aufrollphase und/oder TRO_geschätzt und vRO_geschätzt als die jeweiligen Mittelwerte über die vorangehende Abrollphase berechnet werden.

## Revendications

1. Système destiné à convertir l'énergie cinétique d'un fluide en énergie électrique, le système comprenant :
une génératrice accouplée à un arbre pour produire une puissance électrique lors de la rotation de l'arbre ;
des moyens mécaniques conçus pour convertir un mouvement de fluide en un couple exercé sur l'arbre ;
un dispositif de commande destiné à réguler la vitesse de rotation de l'arbre ;
**caractérisé en ce que** :
le dispositif de commande est conçu pour surveiller la grandeur du couple exercé sur l'arbre, la vitesse de rotation de l'arbre et une valeur d'indicateur de la puissance mécanique appliquée à la génératrice et :
pour respectivement augmenter l'accélération de la vitesse de rotation de l'arbre et réduire la décélération de la vitesse de rotation de l'arbre, si au cours d'une période précédente :
une augmentation de vitesse de rotation s'est accompagnée d'une diminution de couple et d'une augmentation de valeur d'indicateur ; ou
une diminution de vitesse de rotation s'est accompagnée d'une augmentation de couple et d'une diminution de valeur d'indicateur; ou
une augmentation de vitesse de rotation s'est accompagnée d'une augmentation de couple ; et
pour respectivement diminuer l'accélération de la vitesse de rotation de l'arbre et augmenter la décélération de la vitesse de rotation de l'arbre, si, au cours d'une période précédente :
une augmentation de vitesse de rotation s'est accompagnée d'une diminution de couple et d'une diminution de valeur d'indicateur ; ou
une diminution de vitesse de rotation s'est accompagnée d'une augmentation de couple et d'une augmentation de valeur d'indicateur ; ou
une diminution de vitesse de rotation s'est accompagnée d'une diminution de couple.

2. Système selon la revendication 1, dans lequel le moyen mécanique comprend un objet en forme d'arc, un câble d'attache et un tambour.

3. Système selon la revendication 2, dans lequel la valeur d'indicateur de la puissance de sortie est calculée en tant que (TRO - TRI_estimée)/(1/vRO + 1/vRI_estimée) au cours de la phase de déroulement et (TRO_estimée - TRI)/(1/vRO_estimée + 1/vRI) au cours de la phase d'enroulement, où TRO représente la tension du câble d'attache pendant le déroulement, TRI représente la tension du câble d'attache pendant l'enroulement, vRO représente la vitesse du câble d'attache pendant le déroulement, et vRI représente la vitesse du câble d'attache pendant l'enroulement et où le suffixe _estimée fait référence à une valeur estimée.

4. Système selon la revendication 3, dans lequel TRI_estimée et vRI_estimée sont calculées en tant que moyennes respectives pendant la phase d'enroulement précédente et/ou TRO_estimée et vRO_estimée sont calculées en tant que moyennes respectives pendant la phase de déroulement précédente.

5. Système selon la revendication 2, dans lequel les moyens mécaniques sont conçus pour effectuer des transitions entre un état de pleine puissance où un premier couple est exercé sur l'arbre et un état de puissance réduite où un second couple est exercé sur l'arbre, dans lequel le second couple est inférieur au premier couple.

6. Système selon la revendication 5, dans lequel la réduction de puissance des moyens mécaniques comprend la modification de la forme de l'objet en forme d'arc.

7. Système selon l'une des revendications précédentes, dans lequel le système entre dans une phase de transition entre la phase de déroulement et la phase d'enroulement, où la vitesse de déroulement est réduite à l'aide d'un frein mécanique.

8. Système selon l'une des revendications précédentes, dans lequel le système entre dans une phase de transition entre la phase d'enroulement et la phase de déroulement, où le moyen mécanique n'est alimenté en énergie qu'une fois que la vitesse d'enroulement est inférieure à un seuil.

9. Système selon la revendication 1, dans lequel le moyen mécanique est une éolienne ou une turbine hydraulique.

10. Procédé pour convertir l'énergie cinétique d'un fluide en énergie électrique, comprenant les étapes consistant à :
surveiller, au cours d'une période, la vitesse de rotation, le couple et une valeur d'indicateur de la puissance mécanique appliquée à une génératrice accouplée à un arbre pour produire une puissance électrique lors de la rotation de l'arbre, des moyens mécaniques étant conçus pour convertir un mouvement de fluide en un couple exercé sur un arbre ; et
respectivement, augmenter, au moyen d'un dispositif de commande, l'accélération de la vitesse de rotation de l'arbre et diminuer la décélération de la vitesse de rotation de l'arbre, si au cours de la période précédente :
une augmentation de vitesse de rotation s'est accompagnée d'une diminution de couple et d'une augmentation de valeur d'indicateur ; ou
une diminution de vitesse de rotation s'est accompagnée d'une augmentation de couple et d'une diminution de valeur d'indicateur; ou
une augmentation de vitesse de rotation s'est accompagnée d'une augmentation de couple ; et
respectivement, diminuer, au moyen du dispositif de commande, l'accélération de la vitesse de rotation de l'arbre et augmenter la décélération de la vitesse de rotation de l'arbre, si au cours de la période précédente :
une augmentation de vitesse de rotation s'est accompagnée d'une diminution de couple et d'une diminution de valeur d'indicateur ; ou
une diminution de vitesse de rotation s'est accompagnée d'une augmentation de couple et d'une augmentation de valeur d'indicateur ; ou
une diminution de vitesse de rotation s'est accompagnée d'une diminution de couple.

11. Procédé selon la revendication 10, dans lequel la génératrice est utilisée comme une génératrice au cours d'une phase de déroulement et comme un moteur au cours d'une phase d'enroulement, et dans lequel la valeur d'indicateur de la puissance mécanique est calculée en tant que (TRO - TRI_estimée)/(1/vRO + 1/vRI_estimée) au cours de la phase de déroulement et (TRO_estimée - TRI)/(1/vRO_estimée + 1/vRI) au cours de la phase d'enroulement, où TRO représente la tension du câble d'attache pendant le déroulement, TRI représente la tension du câble d'attache pendant l'enroulement, vRO représente la vitesse du câble d'attache pendant le déroulement, vRI représente la vitesse du câble d'attache pendant l'enroulement et où le suffixe _estimée fait référence à une valeur estimée.

12. Procédé selon la revendication 11, dans lequel TRI_estimée et vRI_estimée sont calculées en tant que moyennes respectives pendant la phase d'enroulement précédente et/ou TRO_estimée et vRO_estimée sont calculées en tant que moyennes respectives pendant la phase de déroulement précédente.
